Europäisches Patentamt

European Patent Office

Office européen des brevets

(11) Veröffentlichungsnummer : **0 229 229**
B1

# (12) EUROPÄISCHE PATENTSCHRIFT

(45) Veröffentlichungstag der Patentschrift :
13.12.89

(21) Anmeldenummer : 86113780.0

(22) Anmeldetag : 04.10.86

(51) Int. Cl.⁴ : **B 01 D 53/36**, B 01 J 23/74

(54) **Verfahren zur Herstellung eines Katalysators zur Stickoxidreduzierung von Abgasen.**

(30) Priorität : 12.12.85 DE 3543858

(43) Veröffentlichungstag der Anmeldung :
22.07.87 Patentblatt 87/30

(45) Bekanntmachung des Hinweises auf die Patenterteilung : 13.12.89 Patentblatt 89/50

(84) Benannte Vertragsstaaten :
AT BE CH DE ES FR GB IT LI LU NL SE

(56) Entgegenhaltungen :
DE--A-- 2 619 662
FR--A-- 2 322 642
US--A-- 4 160 744

(73) Patentinhaber : DIDIER ENGINEERING GmbH
Alfredstrasse 28 Postfach 10 09 45
D-4300 Essen 1 (DE)

DIDIER-WERKE AG
Lessingstrasse 16-18
D-6200 Wiesbaden (DE)

(72) Erfinder : Stender, Werner
Dückerstrasse 7
D-4281 Raesfeld (DE)
Erfinder : Jansen, Johann
Brentanostrasse 9
D-4100 Duisburg 11 (DE)
Erfinder : Kainer, Hartmut, Dr.
Sauerbruchstrasse 1a
D-6200 Wiesbaden 12 (DE)
Erfinder : Grimm, Daniel
Hauptstrasse 10
D-6229 Schlangenbad-Bärstadt (DE)
Erfinder : Levkov, Blagoje, Dr.
Rudolf-Vogt-Strasse 41
D-6200 Wiesbaden (DE)
Erfinder : Flockenhaus, Claus, Prof. Dr.
Tersteegenweg 16
D-4300 Essen 1 (DE)
Erfinder : Hackler, Erich
Kettwiger Weinberg 6
D-4300 Essen 18 (DE)
Erfinder : Laue, Karl Heinrich
Bergische Strasse 41
D-4320 Hattingen 16 (DE)

EP 0 229 229 B1

Erfinder : **Merkel, Klaus**
**Schönscheidtstrasse 8**
**D-4300 Essen 13 (DE)**
Erfinder : **Max, Arnold**
**Asbeckstrasse 9**
**D-4250 Bottrop (DE)**

(74) Vertreter : **Brückner, Raimund, Dipl.-Ing.**
**c/o Didier-Werke AG Lessingstrasse 16-18**
**D-6200 Wiesbaden (DE)**

## Beschreibung

Die Erfindung bezieht sich auf ein Verfahren zur Herstellung eines Eisenoxid enthaltenden Katalysators zur Stickoxidreduzierung von Abgasen, insbesondere durch katalytische Reduktion mittels Ammoniak.

Aus der DE-A-26 19 662 ist ein Verfahren zur Behandlung von Stickstoffoxid enthaltendem Gas bekannt.

Es sind zahlreiche Verfahren zur Entfernung von Stickoxiden aus Abgasen bekannt. Hierunter ist insbesondere das Verfahren der selektiven katalytischen Reduktion mittels Ammoniak bewährt und eingeführt. Zum Einsatz kommen unterschiedliche Katalysatoren, die hauptsächlich aus Metalloxiden bestehen. Diesen Metalloxiden können weitere aktive Substanzen beigegeben sein. Nachteilig an den bekannten Katalysatoren ist, daß sie nicht abriebfest und nicht stoßfest sind, keine druckfeste Konsistenz aufweisen und in der Herstellung teuer sind. Letzteres beruht insbesondere darauf, daß die aktiven Substanzen durch mehrere Behandlungsschritte der Ausgangsmaterialien auf komplizierte Art und Weise erzeugt werden müssen und ihre Formgebung besonderer Techniken bedarf.

Aufgabe der vorliegenden Erfindung ist es, ein Verfahren der gattungsgemäßen Art vorzuschlagen, mit welchem auf wirtschaftliche Weise abriebfestes und stoßfestes Katalysatormaterial von druckfester Konsistenz entsteht.

Diese Aufgabe wird erfindungsgemäß dadurch gelöst, daß man natürliches goethitisches Eisenerz in einer Korngröße zwischen 0,5 und 50 mm absiebt, nach dem Absieben in einer Trommel abrundet, danach zur Säurebehandlung in ein Schwefelsäurebad taucht, und nach dem Säurebad auf eine Temperatur über 220 °C erhitzt, die etwa der Anwendungstemperatur bei der katalytischen Reaktion entspricht.

Hierdurch macht man sich die Erkenntnis zunutze, daß man durch Erwärmung von goethitischem Eisenerz beispielsweise über 220 °C hinaus zu $Fe_2O_3$ umformen kann und daß $Fe_2O_3$ eine besondere Eignung für die katalytische Reduktion von Stickoxiden aus Abgasen mittels Ammoniak aufweist. Aufgrund der Säurebehandlung wird die Aktivität des FeIII-Oxids durch Sulfatisierung weiter gesteigert. Damit entsteht bei dem erfindungsgemäßen Verfahren ein außerordentlich aktives, abriebfestes und stoßfestes Katalysatormaterial druckfester Konsistenz.

Von besonderem Vorteil ist es, wenn man das körnige goethitische Eisenerz, vorzugsweise nach dem Absieben und vor der Säurebehandlung. z. B. durch Tumblern oder Polieren in einer Trommel, abrundet. Dadurch werden leicht abbrechende Kanten des körnigen Materials beseitigt; in Schüttungen führt diese Abrundung des Katalysatormaterials zu einer Vergleichmäßigung des Druckverlustes.

Für die Verwendung des Katalysatormaterials als Schüttgut eignen sich insbesondere Korngrößen zwischen etwa 0,5 und 50 mm.

Die Säurebehandlung des goethitischen Eisenerzes erfolgt vorzugsweise dadurch, daß man das natürliche goethitische Eisenerz in ein Schwefelsäurebad taucht, in welchem die Schwefelsäure hinreichend Einwirkungsmöglichkeiten entwickelt. Das Schwefelsäurebad hat vorzugsweise eine Konzentration von 25 bis 96 % $H_2SO_4$.

Das erfindungsgemäße Verfahren eignet sich insbesondere zur Herstellung eines SCR (selektive katalytische Reduktion)-Katalysators.

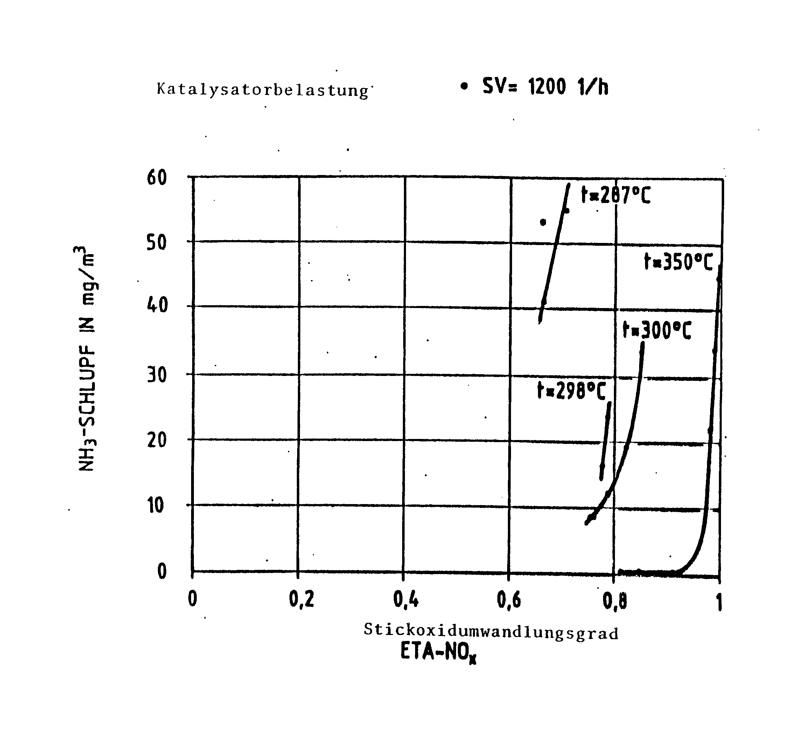

Die Zeichnung veranschaulicht die Wirkung eines derartigen Katalysators hinter einer Rauchgasentschwefelung, wobei der $NH_3$-Schlupf in Abhängigkeit vom Umsatz hinter einer REA (Rauchgasentschwefelungsanlage) aufgetragen ist.

## Patentanspruch

Verfahren zur Herstellung eines Eisenoxid enthaltenden Katalysators zur Stickoxidreduzierung von Abgasen, insbesondere durch katalytische Reduktion mittels Ammoniak, dadurch gekennzeichnet, daß man natürliches goethitisches Eisenerz in einer Korngröße zwischen 0,5 und 50 mm absiebt, nach dem Absieben in einer Trommel abrundet, danach zur Säurebehandlung in ein Schwefelsäurebad taucht, und nach dem Säurebad auf eine Temperatur über 220 °C erhitzt, die etwa der Anwendungstemperatur bei der katalytischen Reaktion entspricht.

## Claim

Method for the manufacture of an iron oxide containing catalyst for reducing nitrogen oxide in exhaust gases, especially by catalytic reduction by means of ammonia, characterised in that natural goethetic iron ore of a grain size between 0.5 and 50 mm is sieved off, rounded off in a drum after the sieving off, then dipped for acid treatment in a sulphuric acid bath, and after the acid bath is heated to a temperature of more than 220 °C, which approximately corresponds to the usual temperature of the catalytic reaction.

## Revendication

Procédé de préparation d'un catalyseur contenant un oxyde de fer, pour la réduction des oxydes d'azote des gaz d'échappement en particulier par réduction catalytique au moyen d'ammoniac, caractérisé en ce que on tamise un minéral de fer, de la goethite naturelle, pour sélectionner les grains de taille comprise entre 0,5 et 50 mm, on arrondit les grains dans un tambour après le tamisage, on les plonge ensuite dans un bain d'acide sulfurique pour un traitement à l'acide, et on les chauffe, après le bain d'acide, à une température supérieure à 220 °C, qui correspond à peu près à la température d'utilisation lors de la réaction catalytique.

Katalysatorbelastung • SV= 1200 1/h

Stickoxidumwandlungsgrad
ETA-NO$_x$